# DEMANDE DE BREVET EUROPEEN

(11) **EP 0 625 398 A1**
(43) Date de publication de la demande: **23.11.1994**
(21) Numéro de dépôt: 94420136.7
(22) Date de dépôt: 02.05.1994
(51) Int. Cl.: B23C 5/10

(54) **Fraise de finition à grande vitesse**

(30) Priorité: 03.05.1993 FR 9305400
(71) Demandeur: YVON BELIN S.A., F-01590 Lavancia Epercy (FR)
(72) Inventeur: Petit, René, F-01590 Dortan (FR)
(74) Mandataire: Poncet, Jean-François

(57) **Abrégé**

L'outil de fraisage selon l'invention comprend une queue (1) de fixation solidaire d'une tête de fraisage (2) munie d'au moins deux arêtes de coupe (3, 4). Les arêtes de coupe (3, 4) comportent des portions périphériques d'arêtes (6, 8) en un premier matériau dur pouvant couper à grande vitesse de coupe, et comportent des portions centrales d'arêtes (5, 7) constituées d'un second matériau dur pouvant couper à vitesse de coupe relativement faible. Le premier matériau dur est par exemple le nitrure de bore cubique. Le second matériau dur est par exemple un carbure fritté. Un tel outil est adapté pour le fraisage à grande vitesse de coupe, par exemple pour l'usinage de matériaux durs.

## Description

La présente invention concerne les outils de fraisage à grande vitesse, utilisables notamment pour la production de matrices et de moules.

La fabrication traditionnelle des matrices et des moules s'effectue généralement soit par électroérosion soit par fraisage conventionnel.

Il apparaît que l'électroérosion ne permet pas de réaliser une surface dont la tolérance dimensionnelle est connue avec précision, et elle nécessite une finition manuelle ultérieure de la surface.

Les outils de fraisage conventionnels travaillent à des vitesses de coupe généralement inférieures à 150 mètres par minute. Les procédés conventionnels de fraisage présentent certaines limites dans la reproduction des formes, notamment parce que l'opération de fraisage est nécessairement réalisée avant traitement thermique de la matière formant le moule. Le traitement thermique ultérieur tend généralement à déformer la surface du moule, et à réduire ainsi la précision dimensionnelle de la forme réalisée.

Pour résoudre ces difficultés, on cherche à usiner l'ébauche de moule après traitement thermique. A cet effet, on développe actuellement des machines de fraisage permettant un usinage à grande vitesse par des outils en matériaux plus durs. On a en effet constaté que l'usinage à grande vitesse permet d'usiner les matériaux durs après leur traitement thermique. Dans certaines conditions, l'usinage peut ainsi constituer la dernière opération à réaliser sur le moule, évitant les étapes de finition ultérieures ou les réduisant très sensiblement.

Dans un usinage à grande vitesse, la vitesse de coupe de l'outil peut atteindre ou dépasser 1 000 mètres par minute. La difficulté est alors de concevoir des outils qui soient adaptés à de telles conditions d'usinage à grande vitesse, et qui puissent en particulier supporter sans dégradation ou vieillissement prématuré les températures élevées apparaissant sur les arêtes de coupe.

Pour la réalisation d'outils adaptés à un fraisage à grande vitesse, on est conduit à utiliser des matériaux durs et réfractaires. Il s'avère toutefois qu'un outil de forme conventionnelle à arêtes de coupe radiales réalisé en un tel matériau dur et réfractaire ne procure pas les avantages attendus. On constate notamment une dégradation assez rapide des arêtes de coupe dans certaines zones de l'outil.

Le document EP-A-0 514 894 décrit un outil de fraisage à grande vitesse généralement hémisphérique dont les deux arêtes de coupe sont entièrement constituées d'un composé à grande dureté tel qu'un nitrure de bore cubique ou un diamant polycristallin. Pour augmenter la résistance mécanique des arêtes, le document enseigne de modifier la forme des arêtes de coupe, avec des portions périphériques d'arête décalées en avant par rapport au plan diamétral dans le sens de rotation de l'outil, et avec une portion centrale radiale d'arête de coupe à facette antérieure inclinée, constituant des arêtes à coupe négative.

Le problème proposé par la présente invention est de concevoir une nouvelle structure d'outil de fraisage adaptée au fraisage à grande vitesse, permettant d'éviter la dégradation rapide des portions centrales d'arêtes de coupe lors de l'usinage, sans recourir à une quelconque modification de la forme des arêtes de coupe. On cherche ainsi à conserver tous les avantages liés aux formes possibles d'arêtes de coupe, tout en réduisant ou en supprimant l'inconvénient des dégradations rapides des portions centrales d'arêtes de coupe.

L'invention résulte de l'observation selon laquelle les dégradations d'arêtes de coupe réalisées en matériaux durs et réfractaires se produisent généralement au voisinage de l'axe de rotation de l'outil, zone dans laquelle la vitesse de coupe est réduite.

La solution selon l'invention consiste alors à prévoir des arêtes de coupe composées de plusieurs tronçons d'arête constitués de matériaux différents adaptés aux différentes vitesses de coupe.

Ainsi, un outil de fraisage de finition pour usinage à grande vitesse selon l'invention comprend une queue de fixation solidaire d'une tête de fraisage munie d'au moins deux arêtes de coupe continues, l'outil étant tel que :
- l'une au moins des arêtes de coupe comporte une portion centrale d'arête, située à l'axe de rotation de l'outil ou à proximité immédiate dudit axe de rotation pour assurer la coupe jusqu'à l'axe de rotation de l'outil, et une portion périphérique d'arête, située à l'écart dudit axe de rotation,
- les portions périphériques d'arêtes, situées à l'écart de l'axe de rotation de l'outil, sont constituées d'un premier matériau dur pouvant couper à grande vitesse de coupe, tel qu'un nitrure de bore cubique ou un diamant polycristallin,
- la ou les portions centrales d'arêtes sont constituées d'un second matériau dur pouvant couper à vitesse de coupe relativement faible, tel qu'un carbure métallique approprié ou un cermet approprié.

Selon un mode de réalisation particulier, chaque arête de coupe comprend deux portions distinctes, une portion centrale réalisée dans un second matériau dur pouvant couper à vitesse de coupe relativement faible, une portion périphérique adjacente constituée d'un premier matériau dur pouvant couper à grande vitesse de coupe.

Selon d'autres modes de réalisation, l'une au moins des arêtes de coupe comporte une portion intermédiaire d'arête, située entre la portion centrale d'arête et la portion périphérique d'arête, et constituée d'au moins un troisième matériau dur pouvant couper à vitesse de coupe intermédiaire, tel qu'un cermet.

Un perfectionnement avantageux de l'invention réside dans la disposition particulière des surfaces de transition entre les différents matériaux de coupe formant les portions successives d'arête de coupe : sur les arêtes de coupe différentes, les surfaces respectives de transition entre les matériaux adjacents successifs formant les arêtes de coupe sont situées à des distances respectives différentes les unes des autres par rapport à l'axe de rotation de l'outil. Cette disposition permet d'éviter les marquages de la surface usinée, marquages résultant d'une usure différentielle entre les portions adjacentes d'arête de coupe réalisées en des matériaux différents, ou résultant de la présence d'une couche intermédiaire de brasure.

De préférence, pour chaque arête de coupe, la surface de transition entre le premier matériau dur de coupe à grande vitesse et le matériau dur de coupe à plus faible vitesse qui lui est adjacent est disposée à une distance de l'axe de rotation de l'outil telle que, aux vitesses de rotation utiles de l'outil pour le fraisage, la vitesse de coupe au voisinage de la surface de transition est supérieure ou égale à la vitesse de coupe minimale admissible pour le premier matériau de coupe à grande vitesse.

D'autres objets, caractéristiques et avantages de la présente invention ressortiront de la description suivante de modes de réalisation particuliers, faite en relation avec les figures jointes, parmi lesquelles:
- la figure 1 est une vue de face d'un outil de fraisage selon un mode de réalisation de l'invention, à deux arêtes de coupe et tête sphérique ;
- la figure 2 est une vue de face à plus grande échelle de la tête d'outil de fraisage de la figure 1 ;
- la figure 3 est une vue en bout à plus grande échelle de la tête d'outil de fraisage de la figure 1 ;
- la figure 4 est une vue en perspective de l'outil de la figure 1 ;
- la figure 5 est une vue de face d'un outil de fraisage selon un autre mode de réalisation de l'invention ;
- la figure 6 est une vue de face partielle à grande échelle d'une portion de tête d'outil de fraisage selon le mode de réalisation de la figure 5 ;
- la figure 7 est une vue en bout à échelle intermédiaire de la tête d'outil de fraisage de la figure 5 ;
- la figure 8 est une vue en perspective de l'outil de la figure 5 ;
- la figure 9 est une vue de face d'un outil de fraisage selon un troisième mode de réalisation de l'invention ;
- la figure 10 est une vue de face partielle à grande échelle d'une portion de tête d'outil de fraisage selon le mode de réalisation de la figure 9 ;
- la figure 11 est une vue en bout à échelle intermédiaire de la tête d'outil de fraisage de la figure 9 ;
- la figure 12 est une vue en perspective de l'outil de la figure 9 ; et
- les figures 13 à 15 illustrent en perspective trois autres modes de réalisation de l'outil selon l'invention.

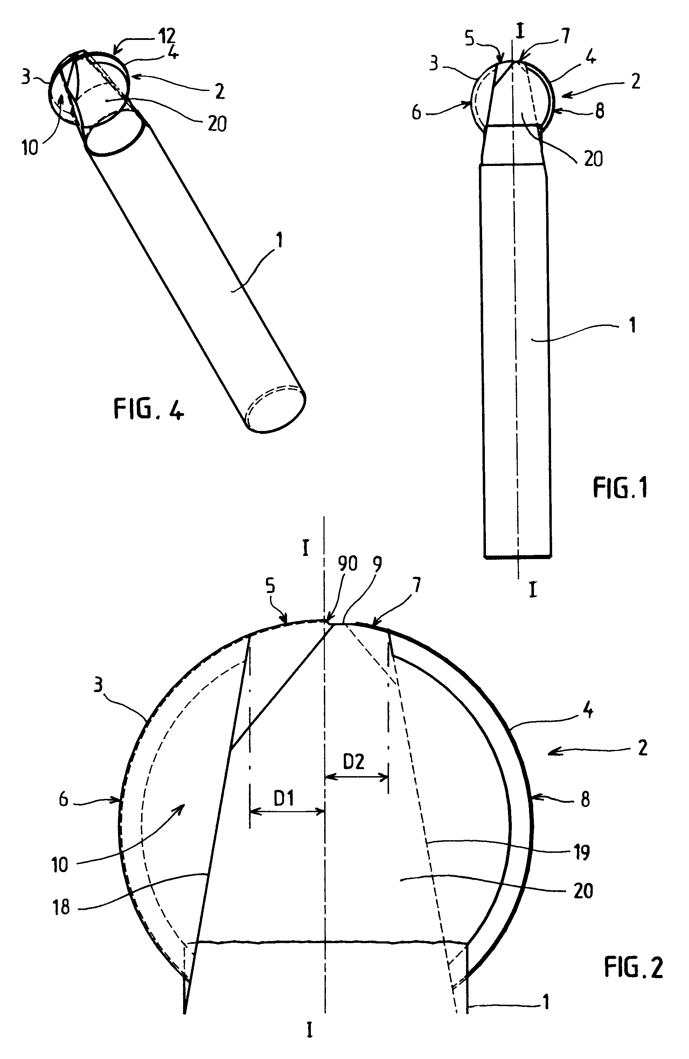

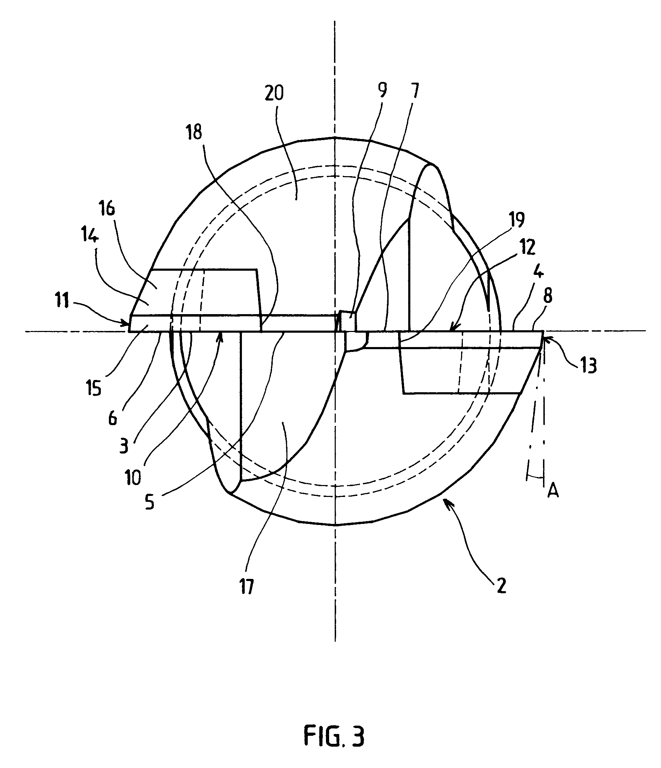

Dans le mode de réalisation représenté sur les figures 1 à 4, l'outil de fraisage selon l'invention comprend une queue de fixation 1 solidaire d'une tête de fraisage 2 généralement sphérique munie de deux arêtes de coupe 3 et 4 continues.

La première arête de coupe 3 comporte une portion centrale d'arête 5, ou portion d'arête située à l'axe de rotation I-I de l'outil ou à proximité dudit axe. Cette même première arête de coupe 3 comprend une portion périphérique d'arête 6, située à l'écart de l'axe de rotation I-I de l'outil, et adjacente à la portion centrale d'arête 5. La portion périphérique d'arête 6 est constituée d'un premier matériau dur pouvant couper à grande vitesse de coupe, tandis que la portion centrale d'arête 5 est constituée d'un second matériau dur pouvant couper à vitesse de coupe relativement faible.

De façon similaire, la seconde arête de coupe 4 comprend une portion centrale d'arête 7, située à proximité de l'axe de rotation I-I, et une portion périphérique d'arête 8 située à l'écart de l'axe de rotation I-I de l'outil. La portion périphérique d'arête 8 est constituée d'un premier matériau dur pouvant couper à grande vitesse de coupe, tandis que la portion centrale d'arête 7 est constituée d'un second matériau dur pouvant couper à vitesse de coupe relativement faible.

Dans le mode de réalisation représenté, les deux arêtes de coupe 3 et 4 ont un profil continu généralement circulaire, et se trouvent toutes deux dans un même plan diamétral passant par l'axe de rotation I-I de l'outil. Un dégagement central 9 est ménagé à l'extrémité frontale de la tête d'outil, entre les deux extrémités des deux arêtes de coupe 3 et 4, sous forme d'un léger creux. De préférence, la première arête de coupe 3 se termine dans le dégagement central 9 par un chanfrein 90, qui renforce la résistance mécanique de l'arête dans cette zone centrale d'outil.

De façon traditionnelle, chaque arête est formée à l'intersection d'un plan diamétral formant le devant de dent, et d'un listel de dent. Ainsi, la première arête de coupe 3 est à l'intersection du devant de dent 10 et du listel 11, tandis que la seconde arête de coupe 4 est à l'intersection du devant de dent 12 et du listel 13. Les devants de dent 10 et 12, dans le mode de réalisation représenté, forment un plan diamétral passant par l'axe I-I de rotation de l'outil, et forment une surface régulière. On réalise ainsi des arêtes de coupe à coupe neutre.

La portion périphérique 6 de la première arête de coupe 3 est taillée dans la couche superficielle 15 d'une plaquette bicouche 14 formée de la superposition d'une couche superficielle 15 faite en premier matériau dur pouvant couper à grande vitesse de coupe, et d'une seconde couche 16 en un matériau brasable. La plaquette bicouche 14 est un insert adapté dans un logement 17 généralement diédrique du corps de tête de fraisage 20, logement dans lequel elle est fixée par brasage selon sa seconde couche 16 en matériau brasable. Le devant de dent 10 est formé en partie par la couche superficielle 15 de premier matériau dur.

La structure de la seconde arête de coupe 4 est similaire, formée par taillage d'une seconde plaquette similaire à la plaquette 14, comme illustré sur les figures.

Dans ce mode de réalisation des figures 1 à 4, les portions centrales d'arêtes 5 et 7 sont directement taillées dans le second matériau dur pouvant couper à vitesse de coupe relativement faible, ce second matériau dur formant le corps de tête de fraisage 20, tandis que les autres portions 6, 8 d'arêtes sont taillées dans des inserts 14 en premiers matériaux durs appropriés solidarisés au corps de tête de fraisage 20.

La couche superficielle 15 de premier matériau dur, formant la portion périphérique 6 de première arête de coupe 3, se raccorde à la couche correspondante de second matériau dur formant la portion centrale 5 de première arête de coupe 3 selon une première surface de transition 18.

De même, la couche superficielle de premier matériau dur formant la zone périphérique 8 de seconde arête de coupe 4 se raccorde à la couche correspondante de second matériau dur formant la zone centrale 7 de seconde arête de coupe 4 selon une seconde surface de transition 19.

Sur la première arête de coupe 3, la première surface de transition 18 est à une distance D1 de l'axe longitudinal I-I de l'outil. Sur la seconde arête de coupe 4, la seconde surface de transition 19 est à une distance D2 de l'axe longitudinal I-I de rotation de l'outil. Les distances D1 et D2 sont choisies de façon que, aux vitesses de rotation utiles de l'outil pour le fraisage, la vitesse de coupe au voisinage des surfaces de transition 18 et 19 est supérieure ou égale à la vitesse de coupe minimale admissible pour le premier matériau de coupe à grande vitesse. On évite ainsi les détériorations de l'arête de coupe correspondante, en s'assurant que les matériaux formant l'arête de coupe travaillent à des vitesses respectives appropriées.

Les parties périphériques 6 et 8 d'arêtes de coupe, formées du premier matériau dur, sont adaptées pour une coupe à vitesse rapide, en utilisant tous les effets bénéfiques d'une telle coupe à vitesse rapide. Par contre, les parties centrales 5 et 7 d'arêtes de coupe sont constituées d'un second matériau adapté à une coupe à vitesse plus lente sans détérioration de ce matériau.

Sur les arêtes de coupe 3 et 4, les surfaces respectives de transition 18 et 19 entre les matériaux adjacents successifs formant les arêtes de coupe sont situées à des distances respectives D1 et D2 différentes l'une de l'autre par rapport à l'axe de rotation I-I de l'outil. Dans le mode de réalisation des figures, la distance D1 est avantageusement supérieure à la distance D2. Grâce à cette disposition, on réduit encore les marquages sur la pièce à usiner.

Pour chaque arête de coupe, le devant de dent 10 ou 12 est une surface régulière dans laquelle, sur les lignes de transition 18 et 19 entre les matériaux adjacents successifs, les portions de surface adjacentes de devant de dent sont tangentes l'une à l'autre.

Les listels 11 et 13 des dents sont en dépouille selon un angle constant ou un angle à variation continue le long de l'arête de coupe respective 3 ou 4. On peut par exemple prévoir un listel présentant un angle A d'environ 7°.

Aux surfaces de transition 18 et 19 entre matériaux adjacents successifs brasables formant les arêtes de coupe 3 et 4, les matériaux adjacents successifs sont brasés l'un à l'autre.

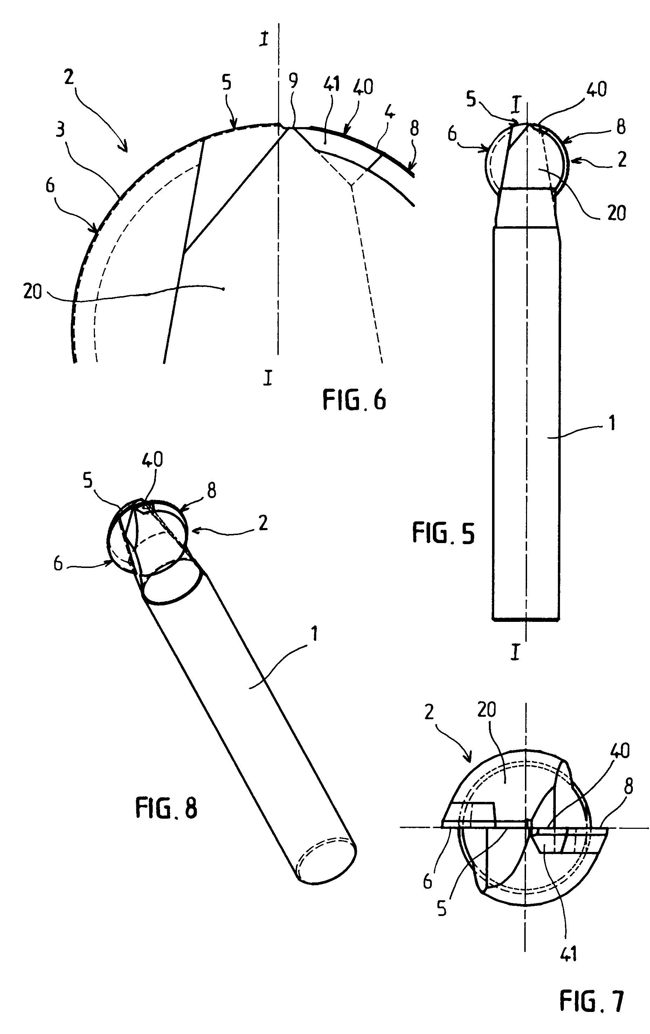

Dans le mode de réalisation illustré sur les figures 5 à 8, les arêtes de coupe 3 et 4 ont sensiblement la même forme que dans le mode de réalisation de la figure 2. Toutefois, dans ce mode de réalisation des figures 5 à 8, la seconde arête de coupe 4 comporte une portion centrale d'arête 40, constituée d'un troisième matériau dur pouvant couper à vitesse de coupe intermédiaire. Cette portion centrale d'arête 40 est taillée dans un insert intermédiaire 41, logé entre la plaquette en premier matériau dur formant la portion périphérique d'arête 8 et le corps de tête de fraisage 20 en second matériau dur.

Selon d'autres modes de réalisation, on peut concevoir des outils de fraisage selon l'invention comprenant au moins une arête de coupe continue comportant une portion intermédiaire d'arête, située entre la portion centrale d'arête et la portion périphérique d'arête, et taillée dans un insert intermédiaire en un matériau dur pouvant couper à vitesse de coupe intermédiaire.

Dans les deux modes de réalisation des figures 1 à 8, le corps de tête de fraisage 20 et la queue de l'outil 1 peuvent avantageusement être formés d'une seule pièce constituée du second matériau dur pouvant couper à vitesse de coupe faible, avantageusement en carbure métallique.

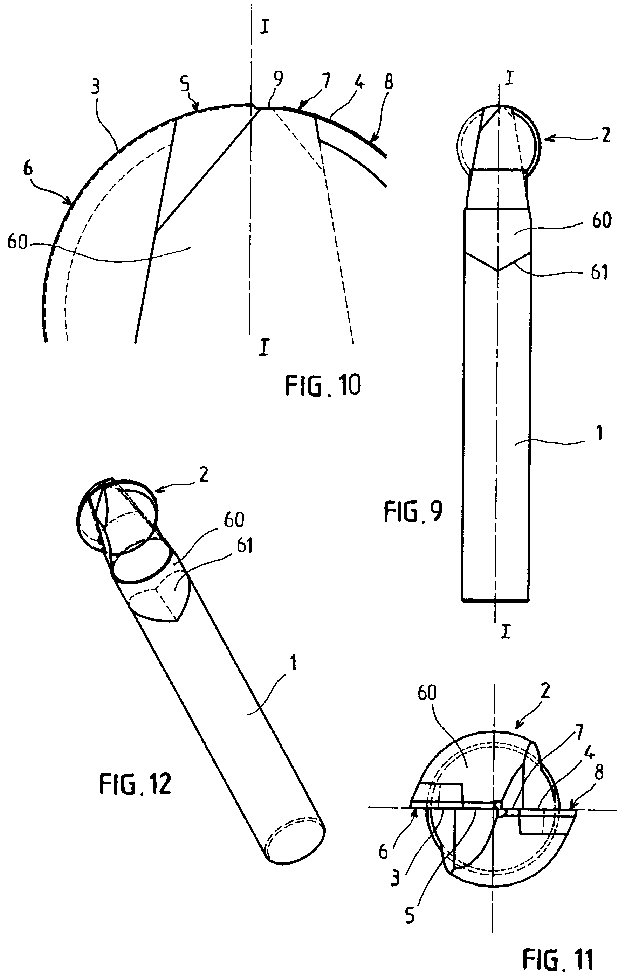

Selon un autre mode de réalisation, illustré sur les figures 9 à 12, le corps de tête de fraisage 20 est un embout 60 en cermet, fixé par brasage en bout d'une queue 1 en acier. La surface de liaison 61 entre l'embout 60 et la queue 1 est avantageusement une surface conique, ou une surface diédrique comme illustré sur les figures 9 et 12.

On comprendra que les effets obtenus par la structure particulière d'arête de coupe selon l'invention ne dépendent pas de la façon par laquelle les arêtes de coupe sont liées à la tête d'outil. Ainsi, on pourra, sans sortir du cadre de l'invention, prévoir notamment des arêtes de coupe taillées dans deux plaquettes fixées mécaniquement par deux vis sur une tête d'outil, comme illustré dans le document EP-A-0 514 894, ou des arêtes de coupe taillées dans deux plaquettes engagées dans une fente diamétrale de tête d'outil et fixées par une seule vis traversant des trous correspondants des plaquettes, ou des arêtes de coupe taillées dans une seule plaquette engagée dans une fente diamétrale de tête d'outil et fixée par une vis.

Dans tous les modes de réalisation qui ont été décrits, le second matériau dur pouvant couper à vitesse de coupe relativement faible peut être un carbure métallique ou un cermet. On peut par exemple utiliser un carbure de tungstène fritté, un carbure de titane. Ces matériaux sont durs et réfractaires, et ils peuvent couper à vitesse de coupe relativement faible, pouvant aller jusqu'à une vitesse sensiblement nulle au voisinage de l'axe de rotation I-I de l'outil sans détérioration anormale de l'arête de coupe.

Le premier matériau dur pouvant couper à grande vitesse de coupe, formant les portions périphériques 6 ou 8 d'arêtes de coupe, peut avantageusement être un nitrure de bore cubique, ou un diamant polycristallin.

Dans le mode de réalisation des figures 9 à 12, la portion centrale d'arête de coupe, constituée par l'insert central ou embout 60, peut avantageusement être constituée en un cermet.

Dans le mode de réalisation des figures 5 à 8, à arêtes de coupe en trois matières ou plus de trois matières, la portion périphérique des arêtes est en nitrure de bore cubique ou en diamant polycristallin, en fonction du type de matériau à usiner. La portion centrale de première arête de coupe 3 est en carbure métallique, et la portion centrale 40 de seconde arête de coupe 4 est en cermet.

Le nitrure de bore cubique procure de bons résultats lorsque la vitesse de coupe est supérieure à 300 mètres par minute, pouvant atteindre plus de 1 000 mètres par minute. Des essais satisfaisants ont été obtenus en prévoyant un outil selon l'invention dont les distances D1 et D2 sont de l'ordre du tiers du rayon de l'outil, tout en restant différentes l'une de l'autre. Dans ce cas, la vitesse de rotation de l'outil est choisie de façon que la vitesse de coupe en périphérie soit de l'ordre de 1 000 mètres par minute. A cette vitesse de rotation, dans la totalité des zones périphériques d'arêtes, la vitesse de coupe est alors supérieure à 300 mètres par minute, et l'outil est ainsi optimisé.

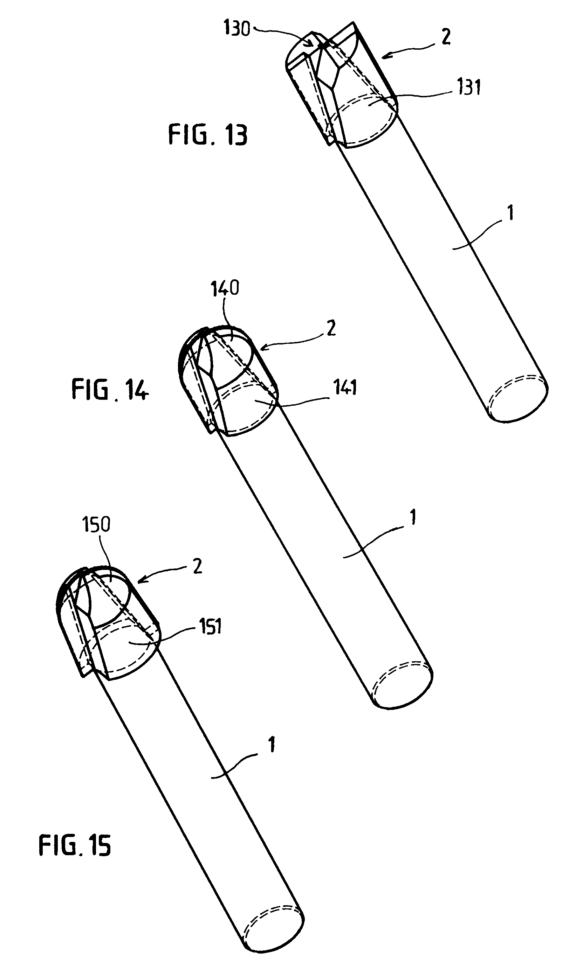

Les modes de réalisation qui ont été décrits et représentés sur les dessins concernent une fraise à tête sphérique. Sans sortir du domaine de l'invention, la même technique à arêtes de coupe en plusieurs zones successives de matières différentes peut être utilisée sur une fraise plate telle qu'illustrée sur la figure 13, c'est-à-dire dont la surface d'extrémité 130 est généralement dans un plan perpendiculaire à l'axe I-I de rotation de l'outil, sa face latérale 131 pouvant être généralement cylindrique ou conique, ou sur une fraise de la figure 14 à face latérale 141 généralement cylindrique terminée par une surface frontale 140 en calotte sphérique, ou sur une fraise de la figure 15 à face latérale 151 généralement conique terminée par une surface frontale 150 en calotte sphérique.

De même, les modes de réalisation décrits comprennent deux arêtes de coupe diamétralement opposées. On peut, sans sortir du domaine de l'invention, concevoir des outils comportant plus de deux arêtes de coupe, l'une au moins des arêtes étant constituée d'au moins deux zones successives adjacentes en matériaux différents.

La structure de fraise selon l'invention présente de grands avantages. En effet, on met à profit l'efficacité très grande des matériaux durs à grande vitesse d'usinage tels que le nitrure de bore cubique ou le diamant polycristallin, tout en réduisant très sensiblement les risques de détérioration des arêtes de coupe, sans avoir à modifier nécessairement la forme des arêtes de coupe.

Egalement, la structure de fraise selon l'invention est naturellement facile à équilibrer, les masses d'équilibrage nécessaires étant peu importantes et permettant de réaliser un équilibrage excellent. Les masses d'équilibrage ne portent que sur la partie proche de l'axe de rotation I-I de l'outil.

La structure de fraise selon l'invention permet de faire un usinage de finition, présentant peu de marquages de la pièce à usiner.

La structure particulière de fraise selon l'invention permet en outre de réaliser une fraise dont les dimensions sont précises, et produisant ainsi un usinage de très haute qualité dimensionnelle. Cela résulte notamment du fait que les listels et devants de dent sont des surfaces régulières.

La présente invention n'est pas limitée aux modes de réalisation qui ont été explicitement décrits, mais elle en inclut les diverses variantes et généralisations contenues dans le domaine des revendications ci-après.

## Revendications

**1** **-** Outil de fraisage de finition pour usinage à grande vitesse de matériaux durs, comprenant une queue (1) de fixation solidaire d'une tête (2) de fraisage munie d'au moins deux arêtes de coupe (3, 4),
- l'une au moins des arêtes de coupe (3) comportant une portion centrale d'arête (5), située à l'axe de rotation (I-I) de l'outil ou à proximité immédiate dudit axe de rotation pour assurer la coupe jusqu'à l'axe de rotation de l'outil, et une portion périphérique d'arête (6), située à l'écart dudit axe de rotation (I-I),
- les portions périphériques d'arêtes (6, 8), situées à l'écart de l'axe de rotation (I-I) de l'outil, étant constituées d'un premier matériau dur pouvant couper à grande vitesse de coupe, tel qu'un nitrure de bore cubique ou un diamant polycristallin,
caractérisé en ce que :
- la ou les portions centrales d'arêtes (5, 7) sont constituées d'un second matériau dur pouvant couper à vitesse de coupe relativement faible, tel qu'un carbure métallique approprié ou un cermet approprié.

**2** **-** Outil selon la revendication 1, caractérisé en ce que l'une au moins des arêtes de coupe (3, 4) comporte une portion intermédiaire d'arête (40), située entre la portion centrale d'arête (5, 7) et la portion périphérique d'arête (6, 8), et constituée d'au moins un troisième matériau dur pouvant couper à vitesse de coupe intermédiaire, tel qu'un cermet.

**3** **-** Outil selon l'une des revendications 1 ou 2, caractérisé en ce que, sur chaque arête de coupe (3, 4), la surface de transition (18, 19) entre le premier matériau dur de coupe à grande vitesse et le matériau dur de coupe à plus faible vitesse qui lui est adjacent est disposée à une distance (D1, D2) de l'axe de rotation (I-I) de l'outil telle que, aux vitesses de rotation utiles de l'outil pour le fraisage, la vitesse de coupe au voisinage de la surface de transition (18, 19) est supérieure ou égale à la vitesse de coupe minimale admissible pour le premier matériau de coupe à grande vitesse.

**4** **-** Outil selon l'une quelconque des revendications 1 à 3, caractérisé en ce que, sur les arêtes de coupe (3, 4) différentes, les surfaces respectives de transition (18, 19) entre les matériaux adjacents successifs formant les arêtes de coupe sont situées à des distances (D1, D2) respectives différentes les unes des autres par rapport à l'axe de rotation (I-I) de l'outil.

**5** **-** Outil selon l'une quelconque des revendications 1 à 4, caractérisé en ce que la ou les portions centrales d'arêtes (5, 7) sont taillées dans le second matériau dur formant le corps de tête de fraisage (20), les autres portions d'arêtes (6, 8) étant taillées dans des inserts (14) en premiers matériaux durs appropriés solidarisés au corps de tête de fraisage (20).

**6** **-** Outil selon la revendication 5, caractérisé en ce que le corps de tête de fraisage (20) et la queue (1) de l'outil sont formés d'une seule pièce en carbure métallique.

**7** **-** Outil selon la revendication 5, caractérisé en ce que le corps de tête de fraisage (20) est un embout (60) en cermet, fixé par brasage en bout d'une queue (1) en acier, avec une surface de liaison (61) de forme conique entre l'embout (60) et la queue (1).

**8** **-** Outil selon l'une quelconque des revendications 1 à 7, caractérisé en ce que les portions périphériques d'arêtes (6, 8) sont taillées dans la couche superficielle (15) en premier matériau dur d'une plaquette bicouche (14) à seconde couche (16) en un matériau brasable, ladite plaquette (14) étant adaptée dans un logement (17) généralement diédrique dans lequel elle est fixée par brasage selon sa seconde couche (16) en matériau brasable, le devant de dent (10, 12) étant formé par la couche superficielle (15) en premier matériau dur.

**9** **-** Outil selon l'une quelconque des revendications 1 à 8, caractérisé en ce que, aux surfaces de transition (18, 19) entre des matériaux adjacents successifs brasables formant les arêtes de coupe (3, 4), les matériaux adjacents successifs sont brasés l'un à l'autre.

**10** **-** Outil selon l'une quelconque des revendications 1 à 9, caractérisé en ce que, pour chaque arête de coupe (3, 4) :
- le devant de dent (10, 12) est une surface régulière dans laquelle, sur les lignes de transition (18, 19) entre les matériaux adjacents successifs, les portions de surface adjacentes de devant de dent sont tangentes l'une à l'autre,
- le listel de dent (11, 13) est en dépouille selon un angle (A) constant ou à variation continue le long de l'arête de coupe (3, 4).
